# EUROPEAN PATENT SPECIFICATION

(11) **EP 1 125 830 B1**
(45) Date of publication and mention of the grant of the patent: **08.06.2005**
(21) Application number: 01103211.7
(22) Date of filing: 12.02.2001
(51) Int. Cl.: B62D 33/027, B62D 33/023, B62D 29/00

(54) **Board for loading body**
Bordwand fur Ladeplattform
Panneau pour plate-forme de chargement

(30) Priority: 15.02.2000 IT MI000084
(43) Date of publication of application: 22.08.2001
(73) Proprietor: Autocar S.p.A., 20129 Milan (IT)
(72) Inventor: Valdetara, Claudio Felice, 20060 Trezzano Rosa, (Province of Milan) (IT)
(74) Representative: Gervasi, Gemma, Dr.

(56) References cited:
- DE-A- 3 538 188
- DE-U- 29 503 592
- FR-A- 1 497 184
- GB-A- 2 347 652
- PATENT ABSTRACTS OF JAPAN vol. 002, no. 050 (M-015), 10 April 1978 (1978-04-10) & JP 53 008922 A (ISUZU MOTORS LTD;OTHERS: 01), 26 January 1978 (1978-01-26)

## Description

The present invention refers to a board (tailboard or side board) for the loading body of an industrial vehicle for transporting light goods, in particular for a goods transport motor vehicle, with a structure essentially in the form of a parallelepiped with a reduced transversal thickness, with a first axial dimension essentially longer than the second axial dimension, and comprising one or more longitudinal section bar components joined reciprocally. Such a board is described in DE-U-295 03 592.

### State of the technique

To date, tipping and non-tipping bodies, of the know type, used on light vehicles for transporting small or medium-sized goods are produced with one or more components in the form of plates, generally in steel or aluminium, joined to one another in various ways, for example by means of joint systems, screws, nails or by welding.

A main disadvantage of this type of known boards is that, in order to make the structure lighter, these are made of metal plate or extruded aluminium, stiffened by a number of longitudinal section bar components with a closed box-shaped transversal section which may or may not be integral with the metal plate. Although this form of implementation makes the body lighter, the stiffness of the structure and the functionality of the body suffer.

Another type of disadvantage is the poor aerodynamic profiling of the vehicle, as the body has many edges which in addition to causing aerodynamic turbulences are also hazardous for operators.

Therefore, the present invention proposes to solve the problems discussed above found in boards realised according to the known state of the art.

### Summary of the invention

The main aim of the present invention is to produce a board which is simple to realise and has a lightweight and modular structure that can be adapted to various sizes of body, while increasing the global structural resistance, especially to flexion loads produced by the load and during movement of the vehicle.

The aim of the present invention is to improve the aerodynamic qualities of the board, in order to reduce the drag of vehicles on which it is fitted.

A further aim of the present invention is to eliminate all sharp edges or areas of potential danger for the operator on the body by careful selection of the forms of the sections forming the board

Yet another aim is to produce a board with improved functionality compared to boards of the know type.

These aims are achieved with a board of the above discussed type which, in accordance with claim 1, is characterised in that the section of the board in the plane that orthogonally cuts its first longer axial dimension is composed exclusively of a plurality of essentially rectangular cells with a closed geometrical form, reciprocally joined integrally at the shortest side, and in which the cell positioned in the centre is less thick than the cells positioned at the ends and in that at least one of the two ends of the board, in the direction of the said first longer axial dimension, is joined to an elongated section bar component, the plane orthogonal to its axis having a C-shaped section, in which a first of the two tips of the C is longer than the other tip, the said first tip of the C being shaped so that it can be joined in a complementary manner to the less thick central part of the board.

Thanks to this layout the board has a more rational and functional appearance, with fewer edges and with improved aerodynamic coefficients, resulting in a noteworthy improvement in the economic yield when the vehicle on which the board is installed is utilised.

### Brief description of the figures

Further characteristics and advantages of the invention will become more evident in the light of the detailed description of a preferred, although not exclusive, embodiment of a loading body board, illustrated merely as an unlimited example with the aid of the annexed drawings, in which:
Figure 1 represents a partial view in perspective of the board according to the invention;
Figure 2 represents a sectional view along the plane II-II of Figure 1 of a component belonging to the board in Figure 1;
Figure 3 represents a cross section of the board in Figure 1;
Figures 4-6 represent, respectively, a front view, a side view and a top view of another embodiment of the component of Figure 2, comprising a section bar wherein bolting and/or clasping elements are positioned.

### Detailed description of a preferred embodiment of the invention

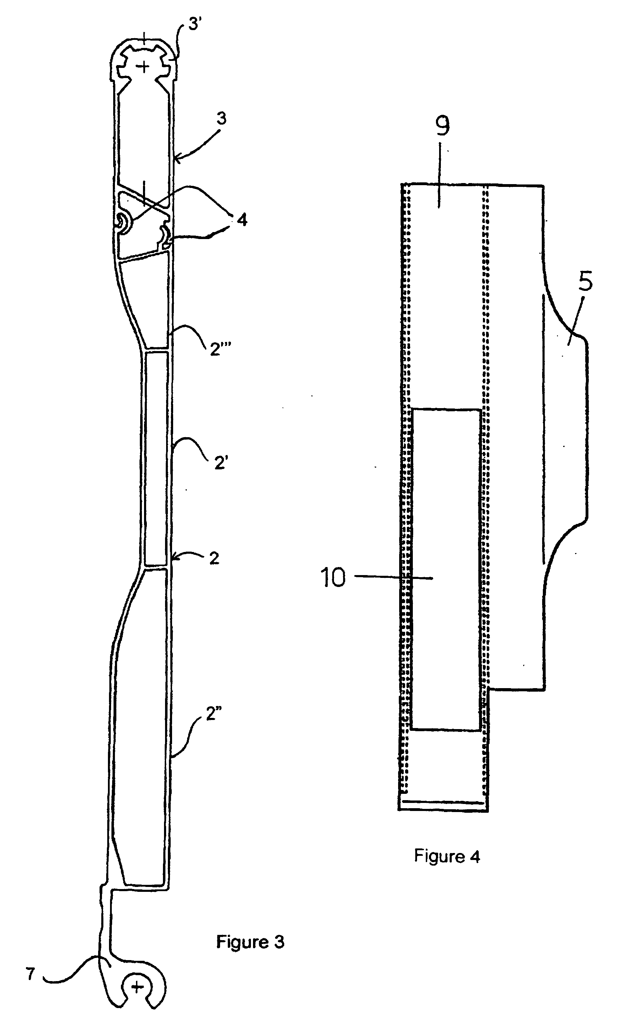

With reference to the aforesaid Figures, a board according to the invention, indicated globally with reference 1, has a parallelepiped shaped structure and a relevantly small transversal thickness. The board 1 comprises two box-shaped longitudinal components (2, 3) produced with section bar components, advantageously in aluminium, and which have a transversal section in a closed box-shaped geometrical form. The longitudinal components (2, 3) are joined integrally to one another, along the longer axial dimension of the board, by means of an interlocking device 4. This device of "clip" type is represented in greater detail in the section view of Figure 3.

The longitudinal section bar component 2, positioned in the lower part of the board has a part 2' which is less thick than those of the other parts 2", 2"' of the board. This part 2', produced with reduced thickness along the entire length of the board, has a closed box-shaped geometric form and forms the essentially central part of the board 1.

Positioned respectively at the two longitudinal ends of the board 1 is a section bar component 5 with a C-shaped transversal section. It is of at least the same length as the height of the board, but may also have higher 6 or lower projecting parts, required to fix or support components, such as hooks or pins, to close or couple it to other parts or components of the body.

Without departing from the scope of the present invention, bolting and/or clasping elements can be provided in a section bar 9 fixed to or integral with the section bar element 5: the pins or bolts of the bolting and/or clasping elements can protrude from the upper, lower and/or side wall of the section bar 9.

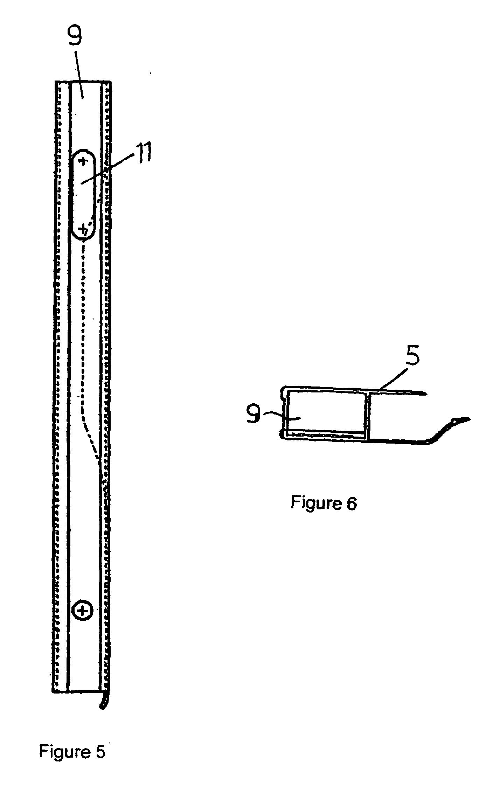

Figures 4-6 show, by way of non limiting example, an embodiment of the invention wherein the section bar 9 is integral with the section bar element 5, as it can be understood from the top view of Figure 6: the front view of Figure 4 shows the opening 10, formed in the section bar 9, through which the bolting and/or clasping element driving means can be reached, while the side view in Figure 6 shows a slot 11, formed in the side wall of the section bar 9, in which a side bolt comprised in the bolting and/or clasping elements can move.

In Figures 4-6 the bolting and/or clasping elements (not shown as known per se from the prior art) has been omitted to simplify the picture.

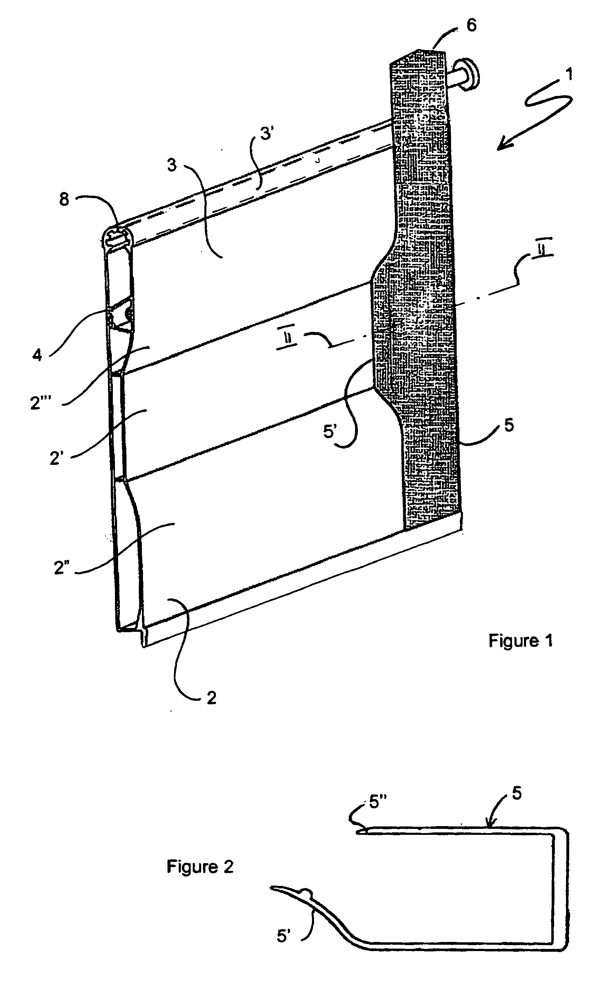

With particular reference to Figure 2, the section bar component 5, in a sectional view, has one of the two edges 5' of the C-shaped section longer in length than the other edge 5". The shape in a side view of this edge 5' is such as to be complementary to the less thick central part 2' of the board when it is joined to the longitudinal component(s) 2 and 3. This creates a streamlined area, thus noteworthily reducing the areas contributing to the production of turbulence that have a negative effect on the drag of the vehicle and increasing the ergonomics of the entire body. Moreover, the general aesthetic line of the vehicle benefits from having softer contours.

The modular form of the board allows different components to be combined to obtain a greater variety of finished boards. Therefore, with a lower number of basic components it is possible to extend the range of available boards to adapt these to various dimensions of vehicles and to various load capacities. For example, it is possible to provide boards composed by joining more than two longitudinal components to one another by means of interlocking systems of the type represented in Figures 2 and 3, or with another equivalent system.

In the section bar components 2, 3 it is also possible during production to provide structural components of the type with a hinge 7 for connection to the platform of the vehicle, for example, or with slots 3' into which reinforcing components 8 are inserted to increase the structural stiffness of the body.

## Claims

1. Board (1) for loading body, in particular for commercial or industrial goods transport vehicles, with a structure essentially in the form of a parallelepiped with a reduced transversal thickness, with a first axial dimension essentially longer than the second axial dimension, and comprising at least one longitudinal section bar component (2, 3), joined reciprocally **characterised in that** the section of the body in the plane orthogonally cutting the said longer first axial dimension is composed exclusively of a plurality of cells (2', 2", 2"') essentially rectangular with a closed geometrical form, reciprocally joined integrally at the shortest end, and in which the cell (2') positioned in the centre is less thick than the cells (2", 2"') at the ends and **in that** at least one of the two ends of the board, in the direction of the said first longer axial dimension, is joined to a section bar component (5) elongated with a C-shaped section of which a first of the two tips (5') of the C-shaped section is longer than the other tip (5"), the said first tip of the C-shaped section being shaped in order to be joined in a complementary manner to the less thick central part (2') of the board.

2. Board as claimed in claim 1, **characterised in that** the said longitudinal components (2, 3) are fixed to one another in a removable manner, in the direction of the longer of the axial dimensions, by means of an interlocking device (4).

3. Board as claimed in claim 2, **characterised in that** it provides in the said longitudinal components (2, 3) one or more longitudinal slots (3') into which reinforcing components (8) are inserted to increase the structural stiffness of the board.

## Patentansprüche

1. Bordwand (1) für Ladeplattform, insbesondere für Fahrzeuge zum Transport von Handels- oder Industriegütern, wobei die Konstruktion im Wesentlichen die Form eines Quaders mit einer relativ geringen Dicke in transversaler Richtung aufweist und eine erste Abmessung in axialer Richtung wesentlich länger ist als die zweite Abmessung in axialer Richtung und wobei die Bordwand wenigstens eine Längskomponente (2, 3) aus Profilen umfasst, die miteinander verbunden sind, **dadurch gekennzeichnet, dass** sich der Querschnitt des Körpers in der Ebene, die die genannte längere axilae Abmessung senkrecht schneidet, ausschließlich aus einer Vielzahl von Zellen (2', 2", 2''') zusammensetzt, die im Wesentlichen rechteckig sind, eine geschlossenen geometrische Form aufweisen und am kürzesten Ende so miteinander verbunden sind, dass sie aus einem Stück sind, wobei die in der Mitte befindliche Zelle (2') weniger dick ist als die an den Enden befindlichen Zellen (2", 2'''), und **dadurch gekennzeichnet, dass** wenigstens eines der zwei Enden der Bordwand in der Richtung der genannten ersten längeren axialen Abmessung mit einer Profilkomponente (5) verbunden ist, die eine lang gestreckte Form und einen C-förmigen Querschnitt aufweist, wobei ein erstes der zwei Enden (5') des C-förmigen Querschnitts länger ist als das andere Ende (5") und das genannte erste Ende des C-förmigen Querschnitts so ausgebildet ist, dass es komplementär mit dem weniger dicken mittleren Teil (2') der Bordwand verbunden werden kann.

2. Bordwand gemäß Anspruch 1, **dadurch gekennzeichnet, dass** die genannten Längskomponenten (2, 3) in der Richtung der längeren axialen Abmessung mittels ineinander greifender Elemente (4) so aneinander befestigt sind, dass die Verbindung gelöst werden kann.

3. Bordwand gemäß Anspruch 2, **dadurch gekennzeichnet, dass** sie in den genannten Längskomponenten (2, 3) eine oder mehrere in Längsrichtung verlaufende Nuten (3') aufweist, in die Verstärkungselemente (8) eingesetzt werden, um die Steifigkeit der Konstruktion der Bordwand zu erhöhen.

## Revendications

1. Panneau (1) pour plate-forme de chargement, en particulier pour des véhicules de transport de marchandises commerciaux ou industriels, avec une structure essentiellement sous la forme d'un parallélépipède d'une épaisseur transversale réduite, avec une première dimension axiale sensiblement plus longue que la seconde dimension axiale, et comprenant au moins un composant de barre de section longitudinale (2,3) reliées selon un mouvement alternatif, **caractérisé en ce que** la section du corps dans le plan coupant orthogonalement ladite première dimension axiale plus longue est constituée exclusivement d'une pluralité de cellules (2', 2", 2'") essentiellement rectangulaires avec une forme géométrique fermée, mutuellement reliées intégralement à l'extrémité la plus courte, et où la cellule (2') positionnée au centre est moins épaisse que les cellules (2", 2"') aux extrémités, et **en ce qu'**au moins l'une des deux extrémités du panneau, dans la direction de ladite première dimension axiale plus longue, est reliée à un composant de barre de section (5) oblong avec une section en forme de C, dont une première des deux pointes (5') de la section en forme de C, est plus longue que l'autre pointe (5"), ladite première pointe de la section en forme de C étant configurée pour être reliée d'une manière complémentaire à la partie centrale moins épaisse (2') du panneau.

2. Panneau selon la revendication 1, **caractérisé en ce que** lesdits composants longitudinaux (2, 3) sont fixés l'un à l'autre d'une manière amovible, dans la direction de la plus longue des dimensions axiales, au moyen d'un dispositif d'interverrouillage (4).

3. Panneau selon la revendication 2, **caractérisé en ce qu'**il réalise dans lesdits composants longitudinaux (2, 3) une ou plusieurs fentes longitudinales (3') dans lesquelles des composants de renforcement (8) sont insérés pour augmenter la rigidité structurelle du panneau.
